# EUROPÄISCHE PATENTANMELDUNG

(11) **EP 2 136 281 A1**
(43) Veröffentlichungstag der Anmeldung: **23.12.2009**
(21) Anmeldenummer: 08011183.4
(22) Anmeldetag: 19.06.2008
(51) Int. Cl.: G06F 1/16, G06F 3/048

(54) **Vorrichtung und Verfahren zur Steuerung einer Ausgabe von Informationselementen**

(71) Anmelder: Gigaset Communications GmbH, 81379 München (DE)
(72) Erfinder: Mari, Andreas, 81829 München (DE); Winter, Thomas, 83607 Holzkirchen (DE)
(74) Vertreter: Michalski Hüttermann & Partner Patentanwälte

(57) **Zusammenfassung**

Die Erfindung betrifft eine Vorrichtung und ein Verfahren zur Steuerung einer Ausgabe von Informationselementen, wobei eine Ausgabeeinheit (1) zumindest ein Informationselement in zumindest zwei verschiedenen Ausgabemodi ausgibt, und ein Sensor (2) eine Lage der Ausgabeeinheit (1) erfasst. Eine Steuereinheit (3) steuert die Ausgabeeinheit (1) in Abhängigkeit von der Lage (L) in einen benutzeroptimierten Ausgabemodus.

## Beschreibung

Die vorliegende Erfindung bezieht sich auf eine Vorrichtung und ein Verfahren zur Steuerung einer Ausgabe von Informationselementen und insbesondere auf eine Vorrichtung und ein Verfahren zur Erhöhung eines Benutzerkomforts bei der Ausgabe von Informationselementen insbesondere in mobilen Telekommunikationsendgeräten.

Die zunehmende Verbreitung von mobilen Endgeräten und insbesondere von mobilen Telekommunikationsendgeräten, wie beispielsweise Mobiltelefonen, schnurlosen Telefonen, PDAs (Personal Digital Assistent) usw., konfrontiert einen Benutzer zunehmend mit stark verkleinerten Ausgabeeinheiten, wie beispielsweise Anzeigeeinheiten bzw. Displays, auf denen jeweilige Informationselemente nur unzureichend dargestellt werden können. In gleicher Weise wächst der Anteil von Benutzern, welche altersbedingt erhebliche Probleme mit der Erkennbarkeit von derart verkleinert ausgegebenen Informationselementen besitzen. Insbesondere Textelemente von Displays weisen demzufolge je nach Größe und Auflösung des Displays bzw. der Anzeigeeinheit und der verwendeten Schriftart und Größe unterschiedliche Lesbarkeiten auf, die für Benutzer mit z.B. einer Sehschwäche nicht erkennbar sind. Bei herkömmlichen Ausgabeeinheiten ist daher üblicherweise nicht sichergestellt, dass die verwendete Schrift oder die dargestellten Symbole bzw. Icons für alle Benutzer des Gerätes problemlos lesbar bzw. erkennbar sind.

Obwohl einige Geräte die Möglichkeit bieten, über eine Menüeinstellung beispielsweise die Schriftgröße für alle oder einige Darstellungssituationen permanent zu ändern, weisen die meisten herkömmlichen Geräte keine derartige Änderungsmöglichkeit für eine verbesserte Darstellung der vorgesehenen Schrift oder Schriftgröße auf. Ferner ist eine Rückstellung auf die ursprüngliche Größe jedenfalls nur über das Menü einstellbar, was wiederum einen Benutzerkomfort oder eine Übersichtlichkeit der dargestellten Elemente wesentlich beeinträchtigt.

Der Erfindung liegt daher die Aufgabe zugrunde, eine Vorrichtung und ein Verfahren zur Steuerung einer Ausgabe von Informationselementen zu schaffen, bei dem ein Benutzerkomfort verbessert ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 12 gelöst.

Erfindungsgemäß kann eine Vorrichtung eine Ausgabeeinheit zum Ausgeben von zumindest einem Informationselement in zumindest zwei verschiedenen Ausgabemodi aufweisen, wobei ein Sensor eine Lage der Ausgabeeinheit erfasst. Eine Steuereinheit steuert die Ausgabeeinheit in Abhängigkeit von der Lage in einen benutzeroptimierten Ausgabemodus, der beispielsweise eine vergrößerte Darstellung eines Informationselements ermöglicht. Auf diese Weise kann beispielsweise durch einen 90°-Schwenk eine verbesserte Erkennbarkeit von ausgegebenen Informationselementen intuitiv bedienbar zur Verfügung gestellt werden. Durch einen Rückschwenk in die ursprüngliche Ausgangsposition kann auf einfache Weise der Standard-Ausgabemodus mit z.B. erhöhter Übersichtlichkeit wieder hergestellt werden. Eine komplizierte Einstellung über jeweilige Menüs ist somit nicht erforderlich, was eine Benutzerakzeptanz wesentlich erhöht.

Vorzugsweise wird von der Steuereinheit ein Informationsgehalt des zumindest einen Informationselements ausgewertet und der benutzeroptimierte Ausgabemodus in Abhängigkeit vom Informationsgehalt und den Eigenschaften der Ausgabeeinheit optimiert. Beispielsweise kann unter Berücksichtigung einer Textlänge des Informationselements und einer Breite der Anzeigeeinheit eine an die Textlänge sowie die Breite der Anzeigeeinheit optimierte Darstellung ausgewählt werden.

Das Informationselement kann beispielsweise ein Bildzeichen, ein Schriftzeichen und/oder Audiozeichen aufweisen. Dadurch können Symbole bzw. Icons, Textnachrichten, Töne oder Sprachnachrichten sowie Kombinationen hiervon in für den Benutzer verbesserter Erkennbarkeit, d.h. Lesbarkeit oder Hörbarkeit, ausgegeben werden. Die Ausgabeeinheit weist hierbei eine Anzeigeeinheit und/oder eine Audio-Ausgabeeinheit auf. Somit können die Informationselemente sowohl optisch als auch akustisch ausgegeben werden.

Der benutzeroptimierte Ausgabemodus kann eine vergrößerte Anzeige, eine erhöhte Ausgabelautstärke und/oder eine Neuordnung von Einzelelementen des zumindest einen Informationselements aufweisen. Insbesondere bei einer Neuordnung bzw. Umgruppierung der Einzelelemente eines Informationselements können die Möglichkeiten einer jeweiligen Ausgabeeinheit weiter genutzt werden, indem beispielsweise eine zweizeilige oder mehrzeilige Ausgabe eines im Standard-Ausgabemodus einzeiligen Textes erfolgt.

Ferner kann eine Benutzerschnittstelle zum Auswählen eines Informationselementes vorhanden sein, wobei im benutzeroptimierten Ausgabemodus nur das im Standard-Ausgabemodus ausgewählte Informationselement ausgegeben wird. Insbesondere die Bearbeitung von Listen (wie beispielsweise Adresslisten) kann dadurch stark vereinfacht werden.

Ferner können die zur Verfügung stehenden Ausgabemodi eine Kontext-Funktionalität aufweisen, wodurch weitere Informationen zum dargestellten Informationselement abgerufen werden können. Insbesondere für den benutzeroptimierten Ausgabemodus kann diese Kontext-Funktionalität auch entfallen, wodurch eine vergrößerte Darstellung weiter verbessert werden kann.

Hinsichtlich des Verfahrens zur Steuerung einer Ausgabe von Informationselementen werden zunächst zumindest ein Informationselement in einen Standard-Ausgabemodus ausgegeben, ferner eine Lage einer Ausgabeeinheit erfasst und die erfasste Lage ausgewertet. Das zumindest eine Informationselement wird in einem benutzeroptimierten Ausgabemodus ausgegeben, wenn eine vorbestimmte Lage der Ausgabeeinheit erfasst wurde.

In den weiteren Ansprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Fig. 1 eine vereinfachte Blockdarstellung einer Vorrichtung zur Steuerung einer Ausgabe von Informationselementen gemäß der vorliegenden Erfindung;
Fig. 2A und 2B eine vereinfachte Darstellung eines Mobiltelefons zur Veranschaulichung der erfindungsgemäßen Wirkungsweise gemäß einem ersten Ausführungsbeispiel;
Fig. 3A und 3B vereinfachte Ansichten einer Anzeigeeinheit zur Veranschaulichung der erfindungsgemäßen Wirkungsweise gemäß einem zweiten Ausführungsbeispiel;
Fig. 4A und 4B vereinfachte Ansichten einer Anzeigeeinheit zur Veranschaulichung einer erfindungsgemäßen Wirkungsweise gemäß einem dritten Ausführungsbeispiel; und
Fig. 5 ein vereinfachtes Flussdiagramm zur Veranschaulichung von Schritten des erfindungsgemäßen Verfahrens.

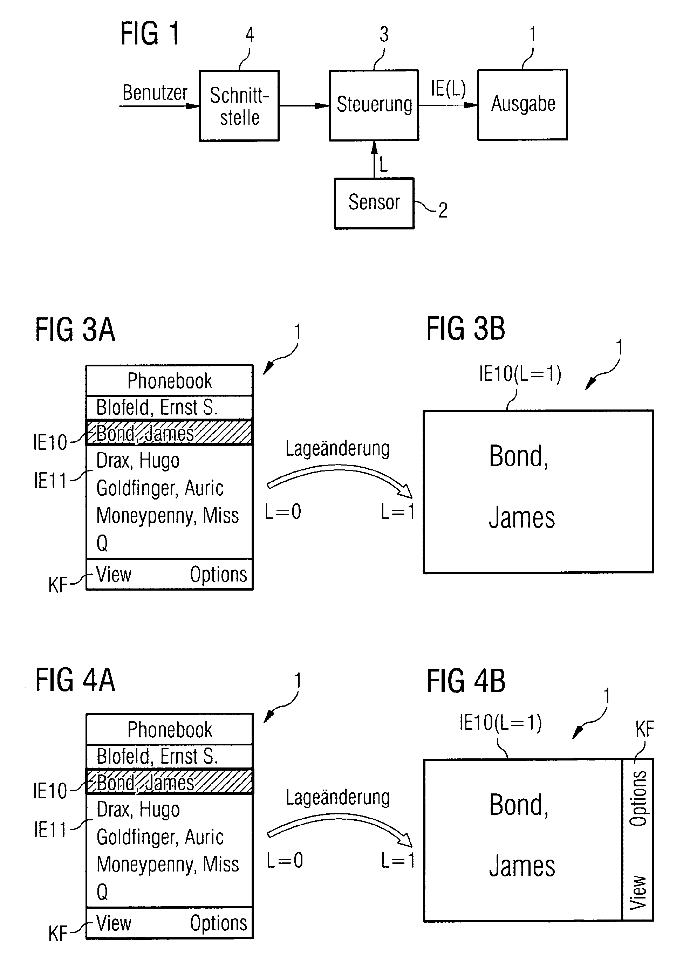

Fig. 1 zeigt eine vereinfachte Blockdarstellung zur Veranschaulichung einer Vorrichtung zur Steuerung einer Ausgabe von Informationselementen gemäß der vorliegenden Erfindung.

Gemäß Fig. 1 weist die Vorrichtung eine Ausgabeeinheit 1 zum Ausgeben von zumindest einem Informationselement in zumindest zwei verschiedenen Ausgabemodi auf. Ein erster Ausgabemodus kann beispielsweise ein Standard-Ausgabemodus sein, während ein zweiter Ausgabemodus ein benutzeroptimierter Ausgabemodus ist, der eine verbesserte Erkennbarkeit beim Benutzer ermöglicht. Selbstverständlich können auch weitere Ausgabemodi bereitgestellt werden und insbesondere weitere benutzeroptimierte Ausgabemodi. Die Ausgabeeinheit 1 weist beispielsweise eine Anzeigeeinheit und insbesondere ein Display, wie beispielsweise eine LCD- (Liquid Crystal Display) oder eine TFT-Anzeigeeinheit (Thin Film Transistor), auf. Selbstverständlich können auch weitere Anzeigeeinheiten als Ausgabeeinheit verwendet werden. Ferner kann die Ausgabeeinheit 1 auch eine Audio-Ausgabeeinheit zum Ausgeben von akustischen Tönen oder Sprachnachrichten aufweisen, wobei insbesondere ein Lautsprecher zur Ausgabe von akustischen Signalen verwendet werden kann. Selbstverständlich sind auch Kombinationen einer Anzeigeeinheit und einer Audio-Ausgabeeinheit möglich.

Gemäß Fig. 1 ist ferner ein Sensor 2 vorgesehen, der eine Lage L der Ausgabeeinheit 1 erfasst. Der Sensor 2 kann folglich einen Lagesensor darstellen und/oder einen BewegungsSensor aufweisen, wodurch ermittelt werden kann, wann die Ausgabeeinheit 1 bzw. ein Gerätedisplay seine Lage deutlich und insbesondere vom Benutzer beabsichtigt verändert. Dies kann beispielsweise eine Drehung um 90° sein, was insbesondere bei den üblicherweise verwendeten rechteckförmigen Anzeigeeinheiten eine Änderung von einem Hochformat zu einem Querformat ermöglicht und bereits aus diesem Grunde beispielsweise eine vergrößerte Darstellung ermöglicht. Selbstverständlich sind auch weitere Sensoren denkbar, welche eine entsprechende Veränderung einer Lage erfassen können. Dies können beispielsweise auch Beschleunigungssensoren oder optische Sensoren sein, die eine absolute oder relative Änderung der Lage erkennen. In gleicher Weise kann auch eine Schwellwert für die Lageveränderung (im Beispiel 90°) verschieden sein und beispielsweise 180°, 45° oder eine beliebige Gradzahl umfassen. Vorzugsweise ist jedoch ein Schwellwert für eine jeweilige Lageveränderung an eine jeweilige Form der Ausgabeeinheit 1 angepasst, um einen Benutzerkomfort entsprechend zu verbessern.

Ferner weist die Vorrichtung gemäß Fig. 1 eine Steuereinheit 3 zum Ansteuern der Ausgabeeinheit 1 in Abhängigkeit von der Lage L in einen benutzeroptimierten Ausgabemodus auf. Der benutzeroptimierte Ausgabemodus kann hierbei z.B. eine vergrößerte Anzeige des zumindest einen Informationselementes darstellen. In gleicher Weise kann der benutzeroptimierte Ausgabemodus aber auch eine erhöhte Ausgabe-Lautstärke für das zumindest eine Informationselement darstellen, wenn es sich bei dem auszugebenden Informationselement um eine Sprachnachricht oder ein akustisches Signal handelt.

Ferner kann die Vorrichtung gemäß Fig. 1 eine Benutzerschnittstelle 4 zum Auswählen eines der insbesondere in einem Standard-Ausgabemodus angezeigten Informationselemente aufweisen, wobei im benutzeroptimierten Ausgabemodus nur das ausgewählte Informationselement ausgegeben wird. Insbesondere bei der Anzeige von beispielsweise Telefonlisten kann auf diese Weise intuitiv durch die Liste gescrollt werden und zur Absicherung des richtigen Namens dieser durch eine Lageveränderung der Ausgabeeinheit 1 beispielsweise vergrößert dargestellt werden. Sobald der Benutzer in dem benutzeroptimierten Ausgabemodus den vergrößerten Namen als richtig erkannt hatte, kann er durch eine weitere Lageveränderung den Standard-Ausgabemodus wieder herstellen und eine weitere Funktionalität, wie beispielsweise den Verbindungsaufbau für eine Telefonverbindung, auslösen.

Dadurch kann insbesondere der Bedienkomfort für mobile Endgeräte mit relativ kleiner Anzeigeeinheit oder schlechten Lautsprechern wesentlich verbessert werden, da ein Benutzer intuitiv und sehr schnell ein jeweiliges Informationselement in verbesserter Erkennbarkeit (z.B. Lesbarkeit, Hörbarkeit usw.) ausgeben kann.

Insbesondere kann die Steuereinheit einen Informationsgehalt des zumindest einen Informationselements auswerten und den benutzeroptimierten Ausgabemodus in Abhängigkeit vom Informationsgehalt und den Eigenschaften der Ausgabeeinheit 1 optimieren. Folglich findet erfindungsgemäß keine simple Vergrößerung bzw. Zoom-Funktion auf Bildpunktebene statt, sondern es kann ein abstrakter Informationsgehalt ausgewertet und in verschiedener Art und Weise dargestellt werden. In diesem Zusammenhang ist insbesondere eine Neuordnung von Einzelelementen des zumindest einen Informationselementes zu nennen, bei der die einzelnen Elemente des zumindest einen Informationselementes (z.B. Vorname und Nachname) im Standardmodus zunächst einzeilig und im benutzeroptimierten Ausgabemodus beispielsweise zweizeilig umgruppiert werden.

In ähnlicher Weise ist auch eine Kombination von unterschiedlichen Ausgabeeinheiten denkbar, wobei z.B. in einem Standard-Ausgabemodus ein Text grafisch angezeigt wird und im benutzeroptimierten Ausgabemodus ein Wechsel der Ausgabeeinheiten hin zu beispielsweise einer akustischen Ausgabe erfolgt, und der im Standard-Ausgabemodus angezeigte Name nunmehr akustisch wiedergegeben wird. Selbstverständlich sind wiederum eine Vielzahl weiterer Kombinationen denkbar und möglich. Insbesondere werden jedoch die Eigenschaften der Ausgabeeinheit, wie beispielsweise eine Größe des Anzeigefelds, eine Bildschirmauflösung, eine Anzahl von darstellbaren Farben usw., durch die Steuereinheit 3 bei der Realisierung insbesondere des benutzeroptimierten Ausgabemodus berücksichtigt.

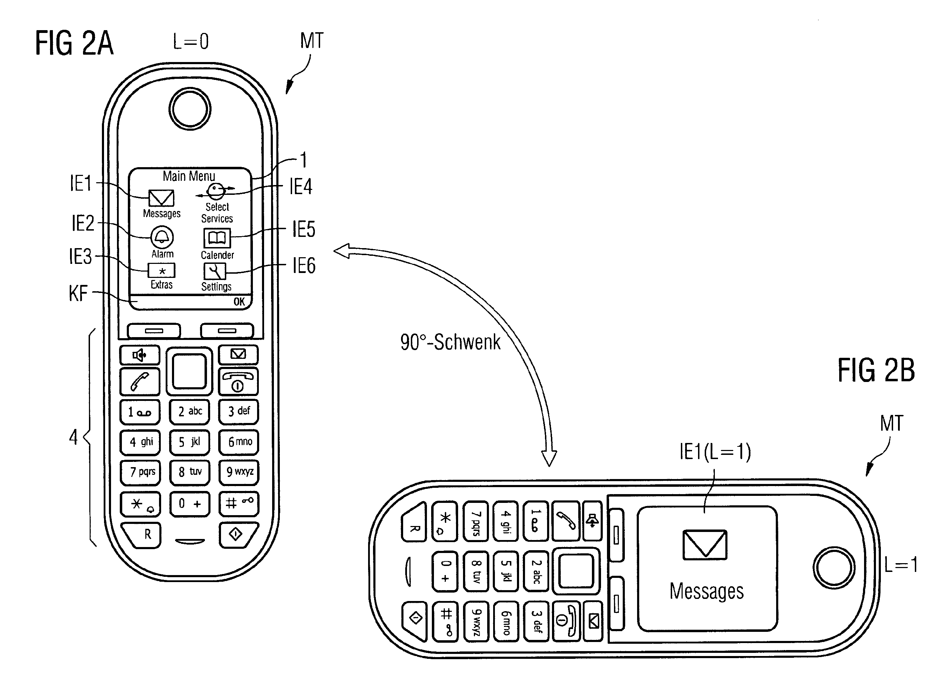

Die Fig. 2A und 2B zeigen eine vereinfachte Draufsicht eines Mobiltelefons zur Veranschaulichung einer Wirkungsweise der erfindungsgemäßen Vorrichtung gemäß einem ersten Ausführungsbeispiel, wobei gleiche Bezugszeichen gleiche oder entsprechende Elemente kennzeichnen und auf eine wiederholte Beschreibung nachfolgend verzichtet wird.

Gemäß Fig. 2A und 2B kann die Vorrichtung zur Steuerung einer Ausgabe von Informationselementen beispielsweise in einem Telekommunikationsgerät und insbesondere in einem Mobiltelefon MT implementiert sein. Das Mobiltelefon MT kann beispielsweise ein GSM-Endgerät (Global System for a Mobile Communication), ein UMTS-Endgerät (Universal Mobile Telecommunications System), ein DECT-Endgerät (Digital European Cordless Telecommunications) oder ein CAT-iq-Endgerät (Cordless Advanced Technology-internet and quality) darstellen. Selbstverständlich kann die vorliegende Erfindung auch in weiteren Geräten und insbesondere in mobilen Endgeräten, wie z.B. PDAs (Personal Digital Assistent) oder sogenannten Smart-Phones implementiert sein.

Gemäß Fig. 2A und 2B wird die Erfindung beispielhaft an genau zwei Ausgabemodi erläutert, wobei in einer ersten Lage L = 0 die Ausgabeeinheit 1 in einem Standard-Ausgabemodus betrieben wird, während sie nach einem 90°-Schwenk in einer Lage L = 1 in einem benutzeroptimierten Ausgabemodus betrieben wird. Gemäß Fig. 2A und 2B weist ein derartiges Telekommunikationsendgerät eine Tastatur sowie weitere Eingabetasten auf, welche die Benutzerschnittstelle 4 gemäß Fig. 1 darstellen und eine selektive Eingabe von Ziffern oder Buchstaben ermöglichen. Insbesondere können hierbei z.B. über sogenannte Soft-Keys, welche der Anzeigeeinheit 1 zugeordnet sind, Benutzereingaben durchgeführt werden. In einem den Soft-Keys entsprechend zugeordneten Anzeigebereich der Anzeigeeinheit 1 können beispielsweise Kontext-Funktionalitäten KF abgebildet werden, welche beispielsweise einen Kontext-bezogenen Aufruf von weiteren Informationen ermöglichen (wie z.B. das Aufrufen von Unter-Menüs usw.).

Gemäß Fig. 2A wird das Mobiltelefon üblicherweise in einer Vorzugsrichtung bzw. Vorzugslage verwendet. Gemäß Fig. 2A ist in dieser bevorzugten Lage L = 0 die Ausgabe bzw. Anzeigeeinheit 1 z.B. im Hochformat ausgerichtet und zeigt eine Vielzahl von Informationselementen IE1 bis IE6 in drei Zeilen und zwei Spalten. Selbstverständlich können auch weitere Darstellungsarten im Standard-Ausgabemodus vorliegen. Über die Benutzerschnittstelle 4 kann ein Benutzer beispielsweise das in der Anzeigeeinheit 1 dargestellte Hauptmenü bzw. Main Menu ansteuern und insbesondere einzelne Informationselemente auswählen, wodurch diese beispielsweise farblich hinterlegt oder anderweitig hervorgehoben werden. Die Informationselemente gemäß Fig. 2A und 2B können beispielsweise Bildzeichen bzw. sogenannte Symbole oder Icons aufweisen, welche zusätzlich mit einem Schriftzeichen bzw. einem Text oder einem Namen weiter gekennzeichnet sind. Zusätzlich kann bei Vorhandensein beispielsweise einer Audio-Ausgabeeinheit ferner ein Audiozeichen in Form eines Tonzeichens oder einer Sprachnachricht ausgegeben werden. Die Lage der Anzeigeeinheit 1 im Standard-Ausgabemodus kann vom Sensor erfasst werden und es wird ihm beispielsweise die Lage L = 0 zugewiesen. Wird nunmehr von einem Benutzer ein z.B. 90°-Schwenk bzw. eine 90°-Drehung des Mobiltelefons MT und insbesondere seiner Ausgabeeinheit 1 durchgeführt, so wird das zunächst im Standard-Ausgabemodus ausgewählte Informationselemente IE1 nunmehr in einem benutzeroptimierten Ausgabemodus (z.B. vergrößert) dargestellt.

Gemäß Fig. 2B umfasst ein derartiger benutzeroptimierter Ausgabemodus eine Darstellung des Bildzeichens bzw. Icons von Informationselement E1 und der zugehörigen Textnachricht "Messages" in einem Querformat und einer vergrößerten Ansicht. Vorzugsweise ist die benutzeroptimierte Ausgabe keine einfache Drehung und Vergrößerung der im Standard-Ausgabemodus dargestellten Bildpunkte, sondern umfasst eine vollständig davon abgelöste Darstellung bzw. Ausgabe des zugehörigen Informationsgehalts. Demzufolge könnte neben der Schriftgröße auch eine leichter lesbare Schriftart bzw. ein anderer Schrifttyp ausgewählt und dargestellt werden. In gleicher Weise könnte eine beispielsweise farbige Darstellung des Symbols im Standard-Ausgabemenü zu einer Schwarz-Weiß-Ausgabe im benutzeroptimierten Ausgabemodus (oder umgekehrt) führen. Die Möglichkeiten sind hierbei vielfältig und werden insbesondere in Richtung einer verbesserten Erkennbarkeit, d.h. Lesbarkeit oder Hörbarkeit, für einen jeweiligen Benutzer optimiert. Insbesondere bei personalisierten Mobiltelefonen können somit individuelle Vorlieben abgelegt werden, welche bei der benutzeroptimierten Ausgabe berücksichtigt werden (z.B. Rot-Grün-Blindheit eines Benutzers).

Nachdem ein Benutzer das im benutzeroptimierten Ausgabemodus gemäß Fig. 2B leicht erkennbare Informationselement IE1 überprüft hat, kann er z.B. durch einen einfachen Rückschwenk um 90° wieder in den Standard-Ausgabemodus gemäß Fig. 2A zurückkehren, der vom Lagesensor erkannt wird und entsprechend die Ausgabeeinheit 1 verändert. Wie bereits vorstehend beschrieben wurde, können auch unterschiedliche Ausgabeeinheiten miteinander kombiniert werden, wobei beispielsweise durch den 90°-Schwenk zur Ansteuerung des benutzeroptimierten Ausgabemodus neben der veränderten Anzeige auch eine Sprachnachricht mit erhöhter Lautstärke für das jeweilige Informationselement IE1 ausgegeben wird.

Obwohl die Lageveränderung nicht auf eine 90°-Drehung beschränkt ist, sondern vielmehr auch andere Lageveränderungen umfassen kann, ist insbesondere eine 90°-Drehung von besonderem Vorteil, da sie die üblicherweise rechteckigen Anzeigeeinheiten von einem Hochformat in ein Querformat überführen, welches insbesondere für zeilenförmige Informationselemente eine vergrößerte Darstellung ermöglicht. Obwohl der Lagesensor beispielsweise eine absolute Lage der Ausgabeeinheit 1 erfassen kann und beispielsweise seine Lage anhand der Schwerkraft absolut bestimmt, kann alternativ oder zusätzlich auch eine relative Lageerfassung durchgeführt werden, wobei neben der Auswertung von bei Lageveränderungen auftretenden Kräften (Beschleunigung, Drehbeschleunigung, usw.) insbesondere ein Benutzer (z.B. Gesicht) als Bezugspunkt ausgewählt werden kann. Demzufolge sind auch Sensoren 2 denkbar, welche z.B. eine Augenstellung eines Benutzers erfassen und entsprechend für zumindest eine erste Lage oder eine zweite Lage auswerten. In gleicher Weise können auch statistisch verteilte und insbesondere zeitbezogene Daten ausgewertet werden, wobei z.B. eine Lage mit einer langen Nutzungsdauer als Standard-Lage L = 0 interpretiert wird und eine dazu stark veränderte Lage als Umschaltsignal für die benutzeroptimierte Ausgabe interpretiert wird.

Fig. 3A und 3B zeigen vereinfachte Ansichten einer Anzeigeeinheit zur Veranschaulichung der Wirkungsweise der vorliegenden Erfindung gemäß einem zweiten Ausführungsbeispiel, wobei gleiche Bezugszeichen wiederum gleiche oder entsprechende Elemente bezeichnen und auf eine wiederholte Beschreibung nachfolgend verzichtet wird.

Gemäß Fig. 3A und 3B können neben Bildzeichen bzw. Symbolen eines jeweiligen Menüs auch Listen und insbesondere eine Telefonliste an der Anzeigeeinheit 1 des Mobiltelefons dargestellt werden. Gemäß Fig. 3A kann die Anzeigeeinheit 1 in ihrem oberen Abschnitt eine Überschrift "Phonebook" aufweisen, welche das beispielsweise ausgewählte Untermenü bezeichnet. Im mittleren Bereich befinden sich eine Vielzahl von Informationselementen, wobei ein Informationselement IE10 über die Benutzerschnittstelle 4 ausgewählt werden kann und z.B. den Nachnamen "Bond" und den Vornamen "James" in Textform enthält. In einem unteren Bereich der Anzeigeeinheit kann ferner eine Kontext-Funktion KF dargestellt sein, welche eine weitere mögliche Auswahl oder Weiterverzweigung in ein anderes Menü bietet. Gemäß Fig. 3A ist dies beispielsweise eine Kontext-Funktionalität "View", wodurch bei einem Druck auf die zugehörige Soft-Key-Taste die weiteren Daten des ausgewählten Informationselements IE10 angezeigt werden können. Dies sind beispielsweise Adressdaten oder eine zugeordnete Telefonnummer. Bei der der rechten Kontext-Funktionalität "Options" zugeordneten "Soft-Key"-Taste kann beispielsweise das ausgewählte Informationselemente IE10 weiter editiert werden.

Bei einer vom Sensor 2 erfassten Lageänderung von L = 0 zu L = 1 (z.B. Drehung um 90°) wird gemäß Fig. 3B das im Standard-Ausgabemodus gemäß Fig. 3A klein dargestellte Informationselement IE10 stark vergrößert und neu gruppiert in einem Querformat dargestellt. Weiterhin kann auch der Schrifttyp geändert werden, um eine verbesserte Lesbarkeit für den Benutzer zu ermöglichen. Die benutzeroptimierte Ausgabe gemäß Fig. 3B stellt somit keine einfache Zoom-Funktion des in Fig. 3A dargestellten Informationselements dar, sondern kann ferner eine Neuordnung der Einzelelemente, wie beispielsweise des Vornamens und des Nachnamens, umfassen.

Insbesondere kann ein Informationsgehalt des Informationselements sowie eine Eigenschaft der Anzeigeeinheit 1 bei der optimierten Ausgabe berücksichtigt werden, um eine weiter verbesserte Erkennbarkeit für den Benutzer bereitzustellen. Beispielsweise kann demzufolge eine Länge und eine Breite des Anzeigefeldes der Anzeigeeinheit 1 sowie eine Anzahl der Buchstaben für die jeweiligen Einzelelemente bzw. den Vornamen und den Nachnamen ausgewertet werden, um so eine für die Anzeigeeinheit optimierte Anzeige zu ermöglichen. Demzufolge würde bei einer derartigen Auswertung des Informationsgehaltes und der Eigenschaften der Anzeigeeinheit das Informationselement IE11 mit dem Namen "Goldfinger" und dem zugehörigen Vornamen "Auric" in geringerer Vergrößerung, aber immer noch optimal an die Anzeigeeinheit 1 angepasst dargestellt werden. Ferner kann gemäß Fig. 3B die Anzeige der Kontext-Funktionalität KF für den optimierten Ausgabemodus entfallen, wodurch eine weitergehende Verbesserung der Erkennbarkeit für das Informationselement ermöglicht wird.

Fig. 4A und 4B zeigen vereinfachte Ansichten einer Anzeigeeinheit 1 zur Veranschaulichung der Wirkungsweise der vorliegenden Erfindung gemäß einem dritten Ausführungsbeispiel, wobei gleiche Bezugszeichen gleiche oder entsprechende Elemente bezeichnen und auf eine wiederholte Beschreibung nachfolgend verzichtet wird.

Die Fig. 4A und 4B entsprechen hierbei im Wesentlichen den Fig. 3A und 3B, wobei jedoch in Fig. 4B nunmehr auch im benutzeroptimierten Ausgabemodus die Kontext-Funktionalitäten weiterhin angezeigt werden. Obwohl hierbei der Anzeigebereich der Anzeigeeinheit 1 geringfügig verringert wird und somit eine weniger starke Vergrößerung ermöglicht, kann gemäß diesem Ausführungsbeispiel ein Benutzer sofort aus dem benutzeroptimierten Ausgabemodus in ein jeweiliges Kontext-Menü voranschreiten ohne vorher durch eine Lageveränderung wieder in den Standard-Ausgabemodus zurückkehren zu müssen. Dies bedeutet einen weiteren Bedienkomfort für einen Benutzer.

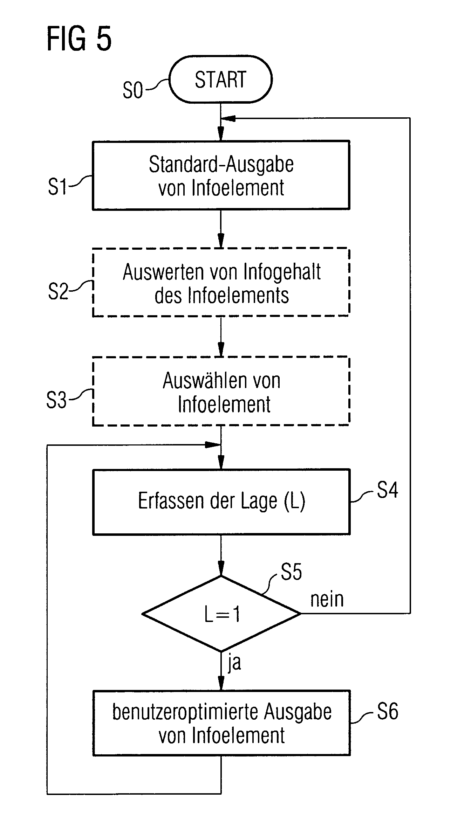

Fig. 5 zeigt ein vereinfachtes Flussdiagramm zur Veranschaulichung von Schritten zur Steuerung einer Ausgabe von Informationselementen gemäß der vorliegenden Erfindung.

Nach einem Start in Schritt S0 kann in einem Schritt S1 zunächst eine Standard-Ausgabe von Informationselementen in der Ausgabeeinheit 1 durchgeführt werden. Beispielsweise wird diesem Standard-Ausgabemodus eine vorbestimmte Lage L = 0 zugewiesen, wobei die Lage über einen Sensor 2 erfasst wird. Wie bereits vorstehend beschrieben wurde, kann der Sensor 2 eine Lageveränderung absolut oder relativ erfassen, wobei insbesondere die Auswertung einer Schwerkraft, eine Beschleunigung, eine Bewegung oder eine relative Lage zu einem Benutzer und insbesondere dessen Augenpartie durchgeführt wird.

In einem optionalen Schritt S2 kann ein Informationsgehalt des im Standard-Ausgabemodus angezeigten Informationselements ausgewertet werden, wobei ferner die Eigenschaften der verwendeten Ausgabeeinheit 1 berücksichtigt werden. Insbesondere kann auf diese Weise z.B. ein maximaler Vergrößerungsgrad für eine bestimmte Anzeigeeinheit und ein jeweils optimaler Schrifttyp ermittelt werden. Der Informationsgehalt kann hierbei z.B. die Anzahl von Buchstaben für einen Text oder die Anzahl von Farben für ein Bildzeichen umfassen. Ferner kann der Informationsgehalt des Informationselements auch einen Frequenzbereich von z.B. einer Sprachnachricht umfassen.

In einem weiteren optionalen Schritt S3 kann ferner ein Auswählen eines bestimmten Informationselements ausgeführt werden, wobei beispielsweise über die Benutzerschnittstelle 4 eine jeweilige Auswahl eines Informationselements von einem Benutzer durchgeführt wird.

Im Schritt S4 kann z.B. vom Lagesensor 2 eine augenblickliche Lage der Ausgabeeinheit 1 erfasst und in einem Schritt S5 mit einer vorbestimmten Lage L = 1 verglichen werden. Die Lage L = 1 kann beispielsweise einer 90°-Drehung der Ausgabeeinheit 1 entsprechen. Sobald im Schritt S5 eine entsprechende Lageveränderung bestätigt wird, kann in einem Schritt S6 eine benutzeroptimierte Ausgabe des jeweiligen Informationselements erfolgen. Sofern in einem Schritt S3 ein Informationselement ausgewählt wurde, wird nunmehr das ausgewählte Informationselement in einem benutzeroptimierten Ausgabemodus dargestellt.

Wie vorstehend beschrieben wurde, umfasst dieser benutzeroptimierte Ausgabemodus hierbei eine für den Benutzer verbesserte Erkennbarkeit des Informationselements und insbesondere eine vergrößerte Anzeige oder eine erhöhte Ausgabe-Lautstärke. Ferner kann eine Neuordnung von Einzelelementen des zumindest einen Informationselements durchgeführt werden oder eine personalisierte Modifikation des Informationselements in Abhängigkeit von einer vorab eingestellten Personalisierung durchgeführt werden. Das Verfahren kehrt wiederum zum Schritt S4 zurück und erfasst weiter die augenblickliche Lage L, wobei sie unmittelbar wieder in den Standard-Ausgabemodus zurückkehrt, wenn die vorbestimmte Lage L = 1 verlassen wird und die davon verschiedene Lage L = 0 festgestellt wird. In diesem Fall verzweigt das Verfahren von Schritt S5 wieder zum Schritt S1 und betreibt die Ausgabeeinheit 1 wieder in einem Standard-Ausgabemodus.

Vorteilhafterweise werden keine exakten Lagewerte für den benutzeroptimierten Ausgabemodus verwendet, sondern vielmehr Schwellwerte, bei deren Überschreitung in den benutzeroptimierten Ausgabemodus geschaltet wird. Ein derartiger Schwellwert kann beispielsweise eine Lageveränderung von 45° darstellen. Dies bedeutet, dass beispielsweise von -45° bis +45° der Standard-Ausgabemodus verwendet wird, und in einem Bereich von 45° bis 135° eine benutzeroptimierte Ausgabe gemäß Fig. 2B durchgeführt wird. Bei einer Drehung bzw. Lageveränderung von -45° bis -135° könnte eine benutzeroptimierte Ausgabe, die der in Fig. 2B dargestellten Ausgabe entspricht, jedoch gespiegelt ist, bzw. auf dem Kopf steht, entsprechen.

Die Erfindung wurde vorstehend anhand eines Mobiltelefons mit einer integrierten Anzeigeeinheit beschrieben. Sie ist jedoch nicht darauf beschränkt und umfasst in gleicher Weise andere Geräte und insbesondere andere Ausgabeeinheiten, welche in Abhängigkeit von ihrer jeweiligen Lage eine für den Benutzer verbesserte Erkennbarkeit von ausgegebenen Informationselementen ermöglicht. Ferner wurde die Erfindung unter Bezugnahme auf 2 Lagewerte L = 0 und L = 1 beschrieben. Sie ist jedoch nicht darauf beschränkt und umfasst in gleicher Weise eine Vielzahl von unterschiedlichen Lagewerten.

### Bezugszeichenliste

- 1: Ausgabeeinheit
- 2: Sensor
- 3: Steuereinheit
- 4: Benutzerschnittstelle
- MT: Mobiltelefon
- L: Lage
- IE: Informationselement
- KF: Kontext-Funktionalität
- S0 bis S6: Verfahrensschritte

## Patentansprüche

1. Vorrichtung zur Steuerung einer Ausgabe von Informationselementen mit:
einer Ausgabeeinheit (1) zum Ausgeben von zumindest einem Informationselement (IE) in zumindest zwei verschiedenen Ausgabemodi;
einem Sensor (2) zum Erfassen einer Lage (L) der Ausgabeeinheit (1); und
einer Steuereinheit (3) zum Ansteuern der Ausgabeeinheit (1) in Abhängigkeit von der Lage (L) in einen benutzeroptimierten Ausgabemodus.

2. Vorrichtung nach Patentanspruch 1, **dadurch gekennzeichnet, dass** die Steuereinheit (3) einen Informationsgehalt des zumindest einen Informationselements (IE) auswertet und der benutzeroptimierte Ausgabemodus in Abhängigkeit vom Informationsgehalt und den Eigenschaften der Ausgabeeinheit (1) optimiert ist.

3. Vorrichtung nach Patentanspruch 1 oder 2, **dadurch gekennzeichnet, dass** die Steuereinheit (3) eine Eigenschaft der Ausgabeeinheit (1) auswertet und der benutzeroptimierte Ausgabemodus in Abhängigkeit von den Eigenschaften der Ausgabeeinheit (1) optimiert ist.

4. Vorrichtung nach einem der Patentansprüche 1 bis 3, **dadurch gekennzeichnet, dass** das Informationselement (IE) ein Bildzeichen, Schriftzeichen und/oder Audiozeichen aufweist.

5. Vorrichtung nach einem der Patentansprüche 1 bis 4, **dadurch gekennzeichnet, dass** die Ausgabeeinheit (1) eine Anzeigeeinheit und/oder Audio-Ausgabeeinheit aufweist.

6. Vorrichtung nach einem der Patentansprüche 1 bis 5, **dadurch gekennzeichnet, dass** der benutzeroptimierte Ausgabemodus eine vergrößerte Anzeige des zumindest einen Informationselements darstellt.

7. Vorrichtung nach einem der Patentansprüche 1 bis 6, **dadurch gekennzeichnet, dass** der benutzeroptimierte Ausgabemodus eine erhöhte Ausgabelautstärke des zumindest einen Informationselements darstellt.

8. Vorrichtung nach einem der Patentansprüche 1 bis 7, **dadurch gekennzeichnet, dass** der benutzeroptimierte Ausgabemodus eine Neuordnung von Einzelelementen des zumindest einen Informationselements (IE) aufweist.

9. Vorrichtung nach einem der Patentansprüche 1 bis 8, **gekennzeichnet durch** eine Benutzerschnittstelle (4) zum Auswählen eines der Informationselemente (IE), wobei im benutzeroptimierten Ausgabemodus nur das ausgewählte Informationselement (IE) ausgegeben wird.

10. Vorrichtung nach einem der Patentansprüche 1 bis 9, **dadurch gekennzeichnet, dass** die Ausgabemodi eine Kontext-Funktionalität (KF) aufweisen.

11. Vorrichtung nach Patentanspruch 10, **dadurch gekennzeichnet, dass** die Kontext-Funktionalität (KF) für den benutzeroptimierten Ausgabemodus entfällt.

12. Vorrichtung nach einem der Patentansprüche 1 bis 11, **dadurch gekennzeichnet, dass** sie in einem Telekommunikationsendgerät, insbesondere Mobiltelefon (MT), implementiert ist.

13. Verfahren zur Steuerung einer Ausgabe von Informationselementen mit den Schritten:
Ausgeben (S1) von zumindest einem Informationselement in einem Standard-Ausgabemodus;
Erfassen (S4) einer Lage (L) einer Ausgabeeinheit (1);
Auswerten (S5) der erfassten Lage (L); und
Ausgeben (S6) des zumindest einen Informationselements in einem benutzeroptimierten Ausgabemodus, wenn eine vorbestimmte Lage (L=1) erfasst wurde.

14. Verfahren nach Patentanspruch 13, mit dem weiteren Schritt:
Auswerten (S2) eines Informationsgehalts des zumindest einen Informationselements (IE), wobei der benutzeroptimierte Ausgabemodus in Abhängigkeit vom Informationsgehalt und/oder den Eigenschaften der Ausgabeeinheit (1) optimiert ist.

15. Verfahren nach Patentanspruch 13 oder 14, mit dem weiteren Schritt:
Auswählen (S3) eines der Informationselemente (IE), wobei im benutzeroptimierten Ausgabemodus nur das ausgewählte Informationselement (IE) ausgegeben wird.

16. Verfahren nach einem der Patentansprüche 13 bis 15, wobei das Informationselement (IE) ein Bildzeichen, Schriftzeichen und/oder Audiozeichen aufweist.

17. Verfahren nach einem der Patentansprüche 13 bis 16, wobei die Ausgabeeinheit (1) eine Anzeigeeinheit und/oder Audio-Ausgabeeinheit aufweist.

18. Verfahren nach einem der Patentansprüche 13 bis 17, wobei das Ausgeben im benutzeroptimierten Ausgabemodus ein vergrößertes Anzeigen des zumindest einen Informationselements (IE) darstellt.

19. Verfahren nach einem der Patentansprüche 13 bis 18, wobei das Ausgeben im benutzeroptimierten Ausgabemodus eine Audio-Ausgabe mit erhöhter Lautstärke darstellt.

20. Verfahren nach einem der Patentansprüche 13 bis 19, wobei beim Ausgeben im benutzeroptimierten Ausgabemodus eine Neuordnung von Einzelelementen des zumindest einen Informationselements aufweist.

21. Verfahren nach einem der Patentansprüche 13 bis 20, wobei beim Ausgeben (S1, S6) des zumindest einen Informationselements (IE) eine Kontext-Funktionalität (KF) ausgegeben wird.

22. Verfahren nach Patentanspruch 21, wobei die Ausgabe der Kontext-Funktionalität (KF) für den benutzeroptimierten Ausgabemodus (S6) entfällt.
